# EUROPEAN PATENT APPLICATION

(11) **EP 2 784 913 A2**
(43) Date of publication of application: **01.10.2014**
(21) Application number: 13189064.2
(22) Date of filing: 17.10.2013
(51) Int. Cl.: H02K 5/167

(54) **Direct drive motor**

(30) Priority: 27.03.2013 JP 2013066134
(71) Applicant: Kabushiki Kaisha Yaskawa Denki, Kitakyushu-shi, Fukuoka 806-0004 (JP)
(72) Inventor: Koike, Haruhiko, Kitakyushu-shi, Fukuoka 806-0004 (JP); Kaku, Yasuhiko, Kitakyushu-shi, Fukuoka 806-0004 (JP)
(74) Representative: Viering, Jentschura & Partner Patent- und Rechtsanwälte

(57) **Abstract**

A direct drive motor (1) includes a primary side fixed ring body (11) and a secondary side movable ring body (21). The primary side fixed ring body includes a hollow part (11a) and is disposed on the lower side along an axis (Q) and on the inner side in the radial direction. The secondary side movable ring body (21) includes a hollow part (21a) and is disposed on the upper side and on the outer side in the radial direction. A fixed side tapered face (11b) is formed on the outer side of the primary side fixed ring body (11) in the radial direction. A movable side tapered face (21b) is formed on the inner side of the secondary side movable ring body (21) in the radial direction and is disposed facing the fixed side tapered face (11b) via a gap (S). An air path (11c) supplies compressed air to the gap (S). The secondary side movable ring body (21) is driven to rotate with respect to the primary side fixed ring body (11) via the gap (S) with the axis (Q) as a rotation center.

## Description

### TECHNICAL FIELD

A disclosed embodiment relates to a direct drive motor.

### BACKGROUND ART

A direct drive motor which directly drives an object to be driven without via a gearbox or the like is disclosed in JP, A, 2007-124854, for example. In this prior art, there are provided a substantially ring-shaped base including a hollow part, a rotating body which is supported rotatably with respect to the base via a bearing, and a motor which rotates the rotating body in a predetermined direction. The motor includes an electric magnet (stator) which is fixed to the base and a permanent magnet (rotor) which is fixed to the rotating body.

### DISCLOSURE OF THE INVENTION

### Problem to be solved by the Invention

In the above prior art, a contact-type bearing such as a ball bearing, a roller bearing, and a cross-roller bearing is used as the bearing supporting the rotating body rotatably. As a result, when the diameter of the rotating body is to be increased, or when rotating speed is to be increased, for example, there arises a problem that bearing durability is degraded and it is difficult to secure smooth and highly precise rotation.

An object of the present invention is to provide a direct drive motor which can secure smooth and highly precise rotation.

### Means for Solving the Problem

In order to achieve the above-mentioned object, according to one aspect of the disclosure, there is provided a direct drive motor including a predetermined axis. The direct drive motor comprises a first ring body and a second ring body. The first ring body includes a first hollow part and is disposed on one side in an axial direction along the axis and also on one side in a radial direction perpendicular to the axial direction. The second ring body includes a second hollow part and is disposed on the other side in the axial direction and also on the other side in the radial direction. The first ring body includes a first tapered face in a part of the first ring body on the other side in the axial direction and also on the other side in the radial direction. The second ring body includes a second tapered face disposed facing the first tapered face via a gap, in a part of the second ring body on the one side in the axial direction and also on the one side in the radial direction. Either ring body of the first ring body or the second ring body includes an air path configured to supply compressed air to the gap, so as to support the other ring body of the first ring body and the second ring body in a non-contact manner. One ring body of the first ring body and the second ring body includes a secondary side member configured to include at least one of a permanent magnet and a reaction plate, to configure a secondary side movable ring body. The other ring body of the first ring body and the second ring body or a fixed body fixed to the other ring body includes a primary side member configured to include an armature coil disposed facing the secondary side member via an air gap, to configure a primary side fixed ring body. The secondary side movable ring body is driven to rotate with respect to the primary side fixed ring body via the gap with the axis as a rotation center.

### Advantages of the Invention

According to a direct drive motor of the present disclosure, it is possible to secure smooth and highly precise rotation.

### BRIEF DESCRIPTION OF THE DRAWING

FIG. 1 is a cross-sectional diagram showing a direct drive motor of an embodiment.
FIG. 2 is a main part plan view showing a disposition relationship between a fixed side ring body and a movable side ring body in a direct drive motor of an embodiment.
FIG. 3A is a horizontal cross-sectional view of a direct drive motor of a comparative example corresponding to a prior art structure.
FIG. 3B is a side cross-sectional view of a direct drive motor of a comparative example corresponding to a prior art structure.
FIG. 4 is a cross-sectional view showing a direct drive motor of a modification for a horizontal disposition.
FIG. 5 is a cross-sectional view showing a direct drive motor of a modification for a downward disposition.
FIG. 6 is a cross-sectional view showing a direct drive motor of a modification which includes variations for a suction mode and a scale position.
FIG. 7 is a cross-sectional view showing a direct drive motor of a modification without using a surface plate.
FIG. 8 is a cross-sectional view showing a direct drive motor of a modification which provides a primary side member and a secondary side member in another dead space.
FIG. 9 is a cross-sectional view showing a direct drive motor of a modification in which reversely, a primary side fixed ring body is provided outside and a secondary side movable ring body is provided inside.
FIG. 10 is a cross-sectional view showing a direct drive motor of a modification which provides a primary side member and a secondary side member in another dead space.

### BEST MODE FOR CARRYING OUT THE INVENTION

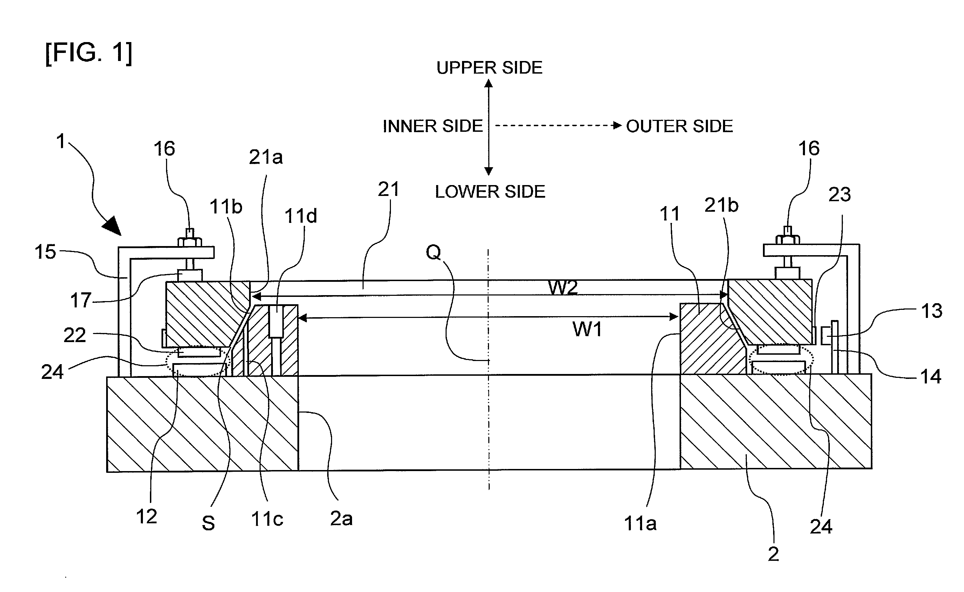

In the following, an embodiment will be explained with reference to the drawings. Note that, the upper side, lower side, inner side, and outer side in the following explanation correspond to respective arrow directions appropriately shown in each of the drawings such as FIG. 1.

### <Outline of a direct drive motor>

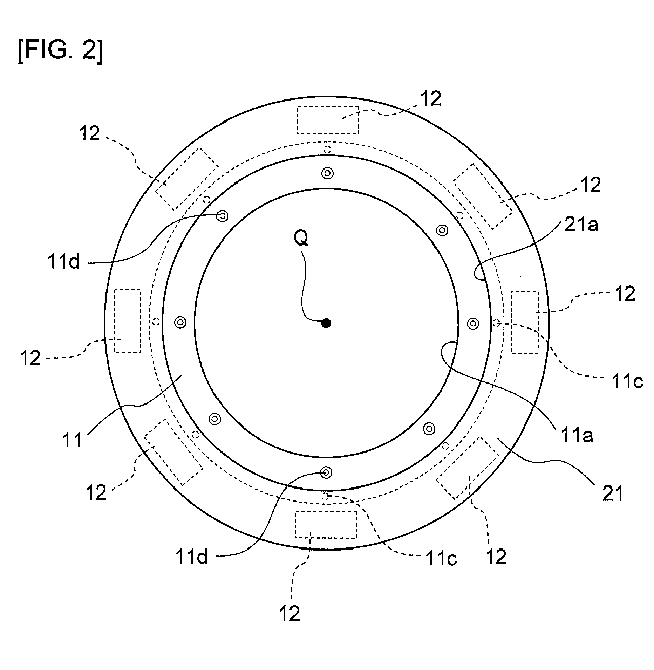

In FIG. 1 and FIG. 2, a direct drive motor 1 includes a primary side fixed ring body 11 (a first ring body, corresponding to the other ring body) and a secondary side movable ring body 21 (a second ring body, corresponding to one ring body). The primary side fixed ring body 11 is disposed on the lower side (corresponding to the one side in the axial direction in this example) from the secondary side movable ring body 21 to be described below, and also on the inner side in the radial direction (corresponding to the one side in the radial direction (same in the following)), and fixed to a surface plate 2 (a stator base, corresponding to the fixed body). The secondary side movable ring body 21 is disposed on the upper side (corresponding to the other side in the axial direction in this example) from the primary side fixed ring body 11, and also on the outer side in the radial direction (corresponding to the other side in the radial direction (same in the following)).

### <Surface plate>

In the surface plate 2, a hollow part 2a is formed having the same axis as the above axis Q of the direct drive motor 1. Further, the surface plate 2 is provided with a detection sensor 13 which detects a rotation position of the secondary side movable ring body 21 and a supporting part 14 which is provided so as to stand up from the surface plate 2 and supports the detection sensor 13.

### <Primary side fixed ring body>

The primary side fixed ring body 11 is formed with stone material (granite), ceramic material, or the like, for example. This primary side fixed ring body 11 is provided with a hollow part 11a (corresponding to the first hollow part), a fixed side tapered face 11b (corresponding to the first tapered face), an air path 11c, and a fixed hole 11d.

The hollow part 11a is formed in a part of the primary side fixed ring body 11 on the inner side in the radial direction so as to have the same axis as the above axis Q. Here, the inner diameter size W1 of the above hollow part 11a is not smaller than 300 [mm] and not larger than 3,000 [mm], for example. The fixed side tapered face 11b is formed in a part of the primary side fixed ring body 11 on the outer side and on the upper side in the radial direction so as to have a state in which the outer diameter of the primary side fixed ring body 11 becomes smaller toward the upper side.

The fixed hole 11d is provided along the axial Q direction on the inner side in the radial direction from the above fixed side tapered face 11b. Further, the fixed hole 11d, as shown in FIG. 2, is formed at plural positions of the primary side fixed ring body 11 in the circumferential direction. A bolt which is not shown in the drawing is inserted through this fixed hole 11d. Then, the bolt is screwed in a female screw formed in the surface plate 2, and thereby the primary side fixed ring body 11 is fixed to the surface plate 2. Note that a through hole may be formed in the surface plate 2, for example, and the end of the bolt may be fixed to the surface plate 2 on the bottom side.

The air path 11c passes through in the direction along the axis Q. Further, the upper end of the air path 11c is opened at the above fixed side tapered face 11b. Further, the air path 11c, as shown in FIG. 2, is formed at plural positions of the primary side fixed ring body 11 in the circumferential direction. Compressed air is supplied to each of the air paths 11c from a compressed air supply source such as a compressor which is not shown in the drawing. In detail, these plural air paths 11c are connected to a ring-shaped communication groove formed within the primary side fixed ring body 11, for example. The compressed air is supplied to each of the air paths 11c from the above common compressed air supply source via the communication groove.

Note that, in this example, the positions of the air paths 11c in the circumferential direction coincide with the circumferential positions of the above fixed holes 11d. This makes it unlikely that when the compressed air is supplied from the above compressed air supply source, the primary side fixed ring body 11 is floated and a gap is formed between the primary side fixed ring body 11 and the surface plate 2.

### <Secondary side movable ring body>

The secondary side movable ring body 21 has a diameter larger than the primary side fixed ring body 11 and is formed with stone material (granite), ceramic material or the like, for example. This secondary side movable ring body 21 is provided with a scale 23 (corresponding to an encoder scale), a hollow part 21a (corresponding to the second hollow part), and a movable side tapered face 21b (corresponding to the second tapered face).

The hollow part 21a is formed in a part of the secondary side movable ring body 21 on the inner side in the radial direction so as to have the same axis as the above axis Q. The movable side tapered face 21b is formed in a part of the secondary side movable ring body 21 on the inner side and on the lower side in the radial direction. Further, the movable side tapered face 21b is formed so as to face the above fixed side tapered face 11b via the gap S (details to be described below) in a state in which the inner diameter becomes smaller toward the upper side. Here, the inner diameter size W2 of the above hollow part 21a is not smaller than 300 [mm] and not larger than 3,000 [mm], for example (however, a value larger than the inner diameter size W1 of the above hollow part 11a). The scale 23 is provided on the outer circumferential face of the secondary side movable ring body 21 and faces the above detection sensor 13.

### <Linear motor>

In the present embodiment, a linear motor is configured including one of the primary side fixed ring body 11 and the secondary side movable ring body 21 (secondary side movable ring body 21 in this example) as the rotor and the other (primary side fixed ring body 11 in this example) as the stator. That is, on the surface plate 2, plural (eight in this example) primary side members 12 including the armature coils which configure the above linear motor are provided so as to be positioned on the outer side in the radial direction from the primary side fixed ring body 11. In this example, the primary side members 12 are provided on the upper surface of the surface plate 2 so as to protrude toward a space 24 (corresponding to a first space) which is generated on the outer side in the radial direction from the primary side fixed ring body 11 and on the lower side from the secondary side movable ring body 21. Note that the number of armature coils for the primary side members 12 is not limited to the number shown in FIG. 2 and can be increased or decreased optionally to a desired number.

On the other side, the secondary side movable ring body 21 is provided with secondary side members 22 including the magnet (or reaction plate) which configures the above linear motor. In this example, the same as the above, the secondary side members 22 are disposed on the lower face of the secondary side movable ring body 21 facing the surface plate 2 so as to protrude toward the above space 24 (corresponding to the first space), the same as the above, which is generated on the outer side in the radial direction from the primary side fixed ring body 11 and on the lower side of the secondary side movable ring body 21. Thereby, the secondary side members 22 face the above primary side members 12 provided on the surface plate 2, in the up and down direction.

### <Compressed air supply and linear motor drive>

In the above configuration, when the compressed air is not supplied from the air path 11c, the fixed side tapered face 11b of the primary side fixed ring body 11 and the movable side tapered face 21b of the secondary side movable ring body 21 come to contact each other because of the weight of the secondary side movable ring body 21. On the other side, when the compressed air is supplied to the air path 11c from the above compressed air supply source, the secondary side movable ring body 21 is floated and is separated from the primary side fixed ring body 11. That is, the gap S is formed between the fixed side tapered face 11b and the movable side tapered face 21b. As a result, the secondary side movable ring body 21 is supported by the primary side fixed ring body 11 in the non-contact manner.

In this state, current is applied to the armature coils of the primary side members 12. Thereby, by the current flow due to the current application and magnetic force from the magnet of the secondary side members 22, the secondary side movable ring body 21 is rotated with respect to the primary side fixed ring body 11 in the circumference direction with the axis Q as a rotation center, via the gap S between the above movable side tapered face 21b and fixed side tapered face 11b. As a result, the direct drive motor is realized including the secondary side movable ring body 21 as the rotor and the primary side fixed ring body 11 as the stator.

### <Pad member>

In this configuration, a pad member 17 is provided for a support rod 15 which stands up from the surface plate 2 via an adjustment member 16. In the above example, the secondary side movable ring body 21 contacts the above pad member 17 in the up and down direction during the above floating. Thereby, for the secondary side movable ring body 21, a floating distance (i.e., magnitude of the gap S) from the primary side fixed ring body 11 is adjusted. Note that the support rod 15 and the pad member 17 may be provided across the whole circumference of the secondary side movable ring body 21 or may be provided for some positions along the circumferential direction.

Further, the pad member 17 may be a simple elastic pad member or an air pad (air ejection part). The air pad ejects compressed air to a pressure reception part of the illustrated upper surface of the secondary side movable ring body 21 (downward in this example), so as to apply force the secondary side movable ring body 21 toward the primary side fixed ring body 11. In this case, even when a repulsive force can work in a direction separating the secondary side movable ring body 21 and the primary side fixed ring body 11 from each other, for example, it is possible to adjust the gap S between the above fixed side tapered face 11b and movable side tapered face 21b into an appropriate state by the ejection force of the compressed air.

Alternatively, instead of the pad member 17, a suction part may be provided separately to the primary side fixed ring body 11 or the surface plate 2 (or a member attached thereto). In this case, a part to be sucked (not shown in the drawing) is provided at a part (lower part in this example) of the secondary side movable ring body 21 (or a member attached thereto), serving as the rotation side, on the side of the primary side fixed ring body 11. The above suction part sucks the above part to be sucked magnetically or by a reduced pressure so as to apply force the secondary side movable ring body 21 toward the primary side fixed ring body 11. Thereby, the suction part sucks the secondary side movable ring body 21 downward. In this case, even when a repulsive force can work in a direction separating the secondary side movable ring body 21 and the primary side fixed ring body 11 from each other, for example, it is possible to adjust the gap S between the above fixed side tapered face 11b and movable side tapered face 21b into an appropriate state by the suction force applied from the suction part to the part to be sucked.

Note that the above pad member 17 and the modifications thereof (replacement examples) can be applied to each of modifications described in the following other than the present embodiment, and the same advantage as the above are obtained.

### <Advantages of the embodiment>

As explained above, in the direct drive motor 1 of the present embodiment, the secondary side movable ring body 21 is driven to rotate in the circumferential direction by a linear motor (while details will be omitted, there exist a linear synchronous motor, a linear induction motor, a linear pulse motor, a linear DC motor, and the like, for example) which includes the primary side fixed ring body 11 as the stator and the secondary side movable ring body 21 as the rotor. On this occasion, the compressed air is applied to the gap S between the fixed side tapered face 11b of the primary side fixed ring body 11 and the movable side tapered face 21b of the secondary side movable ring body 21 to configure a static pressure bearing. By this static pressure bearing, the primary side fixed ring body 11 supports the secondary side movable ring body 21 in the non-contact manner. Thereby, it is possible to prevent durability degradation of the bearing as that in a case of using the contact-type bearing. Further, since the secondary side movable ring body 21 is floated by air, a friction loss of the bearing is extremely small and an energy loss is small even in high-speed rotation and in speed increase or decrease. Further, since the bearing part has the taper, the axis is easily aligned and it is possible to secure smooth and highly precise rotation having small axis deflection.

At this time, in the present embodiment, the primary side members 12 and the secondary side members 22 are disposed in the space 24 which is generated on the outer side in the radial direction from the primary side fixed ring body 11 and on the lower side from the secondary side movable ring body 21. This disposition has the following meaning.

As described above, in the present embodiment, the fixed side tapered face 11b of the primary side fixed ring body 11 and the movable side tapered face 21b of the secondary side movable ring body 21 face each other via the gap S and are displaced from each other relatively via the static pressure bearing in the gap S. At this time, the primary side fixed ring body 11 is provided on the lower side and on the inner side in the radial direction, and the secondary side movable ring body 21 is provided on the upper side and on the outer side in the radial direction. In other words, these primary side fixed ring body 11 and secondary side movable ring body 21 are disposed so as to be stacked in the axial direction while being shifted in the radial direction. As a result of such a disposition, the above space 24 is generated as a dead space on the outer side in the radial direction from the primary side fixed ring body 11 and on the lower side from the secondary side movable ring body 21.

Accordingly, in the present embodiment, in a manner of utilizing this dead space, the primary side members 12 and the secondary side members 22 configuring the above linear motor are provided in the above space 24. Thereby, an additional space is not necessary in particular for disposing the linear motor, and therefore it is possible to reduce the size of the entire direct drive motor 1. That is, it is possible to realize both of securing the smooth and highly precise rotation by preventing the durability degradation in the bearing and reducing the size of the direct drive motor 1.

Further, as explained above, it has the following meaning that the direct drive motor 1 having a large diameter is realized by the use of the static pressure bearing in the present embodiment. That is, when this kind of direct drive motor is designed, in a prior art, typically a motor part (rotor and stator) is designed first, and then a bearing is selected to match the motor part.

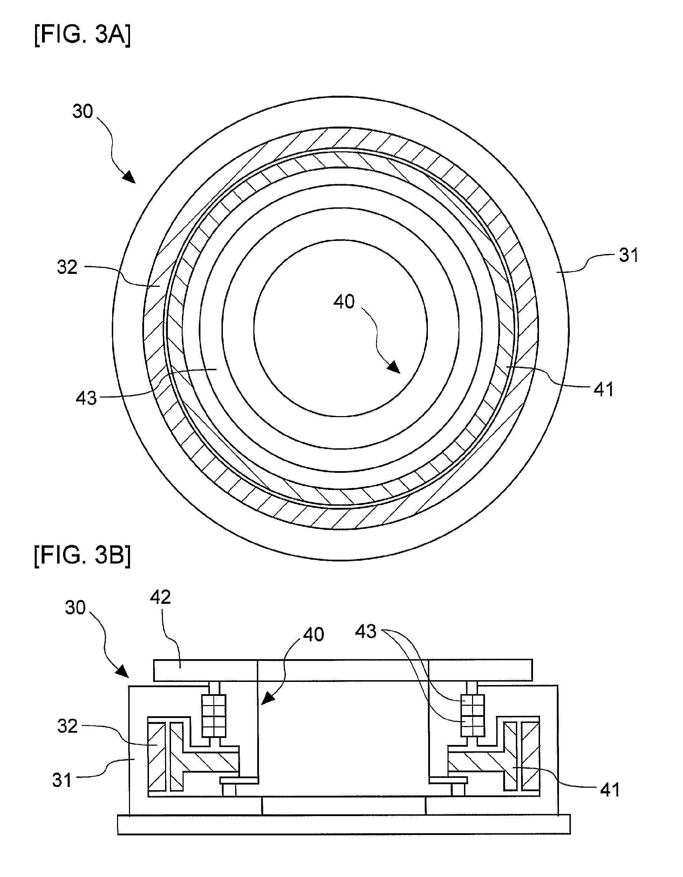

A comparative example of the present embodiment is shown in FIG. 3A and FIG. 3B. As shown in FIG. 3A and FIG. 3B, in this comparative example, a stator 30 is provided within a metal frame 31 having a cylindrical shape, for example, including an armature coil (motor coil) 32 having a substantially annular shape and a magnet (motor magnet) 41 of a rotor 40 is disposed on the inner side thereof in the radial direction. The outer circumferential part in the radial direction of the above rotor 40 which has a substantially cylindrical shape and is provided with a table 42 on the upper part is supported by the above metal frame 31 in a rotatable manner via an optional metal bearing 43. In such a configuration, when the diameter is tried to be increased as the diameter of the direct drive motor 1 of the above embodiment (outer diameter: substantially 3,000 mm), the above stator 30 and magnet 41 of the rotor 40 also become huge structures each having an outer diameter of substantially 3,000 mm. As a result, actually, it is very difficult to carry out manufacturing thereof.

On the other hand, the inventor and others of the present application, in opposite to the above prior art method, first designed the configuration of the bearing part (static pressure bearing), and then designed a motor (linear motor) matching the static pressure bearing, and thereby realized the increase of the diameter which had been difficult to realize in the above method, for the first time.
Note that, although a direct drive motor of the linear motor drive which has a possibility of increasing the diameter similarly is disclosed in JP, A, 2006-333652, for example, a structure of a bearing part such as the structure in the present embodiment is not described at all in the patent and a structure supporting a rotating body in a rotatable manner is not clear.

In the present embodiment, by the above configuration, it is possible to realize the diameter increase to substantially 3,000 mm in an inner diameter size W2 of the hollow part 21a as described above. Further, there has been realized a highly precise configuration in which a floating amount (size of the gap S) of the secondary side movable ring body 21 achieved by the static pressure bearing in this case is several microns to substantially ten microns. In other words, this means that the axis of the primary side fixed ring body 11 and the axis of the secondary side movable ring body 21 match each other having an error not larger than the floating amount (size of the gap S). By realizing such highly precise axis alignment, it is possible to realize higher-speed rotation of the motor, reduction of rotation unevenness and speed unevenness, and reduction of vibration and noise. In particular, in a large-size direct drive motor having the number of rotations in a range of 200 to 1,000 rpm, an inertial force becomes large in the secondary side movable ring body. As a result, when the axis has deflection, vibration during motor rotation becomes large and stable rotation is not realized. Further, in a design method of a coil and a magnet which configure an electro-magnetic part in a typical rotation motor, a circumferential speed becomes very high in the electro-magnetic part of a large size direct drive motor and magnetic saturation occurs, and therefore high-speed rotation cannot be achieved. Accordingly, highly precise axis alignment of the bearing and selection of the armature part and the field-system part are very important.

Moreover, in particular, the present embodiment further includes the surface plate 2 to which the primary side fixed ring body 11 is disposed. Then, the secondary side members 22 are provided for the secondary side movable ring body 21 so as to protrude toward the space 24, and the primary side members 12 are provided for the surface plate 2 so as to protrude toward the space 24.

The present embodiment is provided with three members of the surface plate 2, the primary side fixed ring body 11 which is fixed to this surface plate 2, and the secondary side movable ring body 21 which is supported by this primary side fixed ring body 11 in the non-contact manner. By the structure in which the primary side fixed ring body 11 is fixed to the surface plate 2 as described above, it is possible to realize a stable and secure supporting structure. Further, by providing the primary side members 12 on the surface plate 2, it is not necessary to provide a fixing structure for fixing the primary side members 12 to the primary side fixed ring body 11, and it is possible to simplify the structure of the primary side fixed ring body 11.

Further, particularly in the present embodiment, the primary side fixed ring body 11 is configured to enable the number of armature coils for the primary side members 12 to be increased or decreased as described above.

Thereby, it is possible to increase or decrease output torque of the motor and set the torque to have a desired value easily by appropriately increasing or decreasing the number of armature coils.

Further, particularly in the present embodiment, each of the primary side fixed ring body 11 and the secondary side movable ring body 21 is configured with stone material (granite, etc.), ceramic material, or the like, and the inner diameter size W1 of the hollow part 11a and the inner diameter size W2 of the hollow part 21a are set in a range of 300[mm] to 3,000[mm].

In the present embodiment, by the configuration as described above, even when the diameters of the primary side fixed ring body 11 and the secondary side movable ring body 21 are increased as described above, it is possible to securely prevent the durability degradation of the bearing. Note that, when it is not necessary to obtain the secure prevention effect by the stone material, the ceramic material, or the like as described above, each of the primary side fixed ring body 11 and the secondary side movable ring body 21 may be configured with material except the above stone material and ceramic material (e.g., metal material etc.).

Note that the disclosed embodiment is not limited to the above description and can be modified variously in a range without departing from the gist and technical idea thereof. In the following, such modifications will be explained sequentially. Note that, in each of the following modifications, while illustration and explanation will be omitted, the same air path 11c as that in the above description is provided for the primary side fixed ring body 11 and the compressed air is supplied. Then, by this supply of the compressed air, the secondary side movable ring body 21 is supported by the primary side fixed ring body 11 via the gap S in the non-contact manner. Further, the same sign is attached to a part equivalent to that of the above embodiment and explanation will be omitted or simplified appropriately.

### (1) In case of horizontal disposition

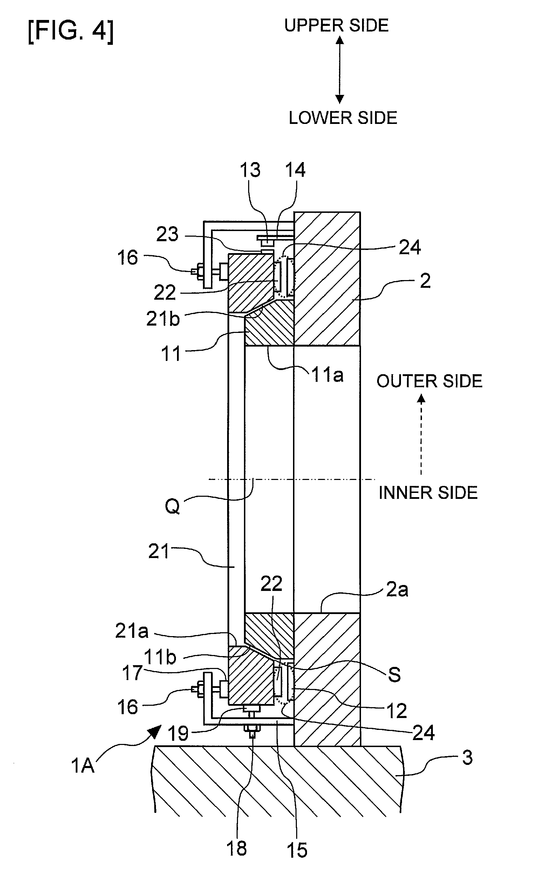

While, in the above embodiment, the primary side fixed ring body 11 and the secondary side movable ring body 21 are disposed so as to have the axis Q in the vertical up and down direction, the present disclosure is not limited to such a disposition. That is, as in a direct drive motor 1A shown in FIG. 4, the primary side fixed ring body 11 and the secondary side movable ring body 21 may be disposed so as to have the axis Q in the horizontal direction.

That is, in the direct drive motor 1A, the above primary side fixed ring body 11 is disposed on the illustrated right side (corresponding to the one side in the axial direction in this example) and on the inner side in the radial direction from the secondary side movable ring body 21, and fixed to the surface plate 2 on the illustrated left side. Further, the above secondary side movable ring body 21 is disposed on the illustrated left side (corresponding to the other side in the axial direction in this example) and on the outer side in the radial direction from the primary side fixed ring body 11.

The fixed side tapered face 11b is formed in a part of the primary side fixed ring body 11 on the outer side in the radial direction and on the illustrated left side, in a state that the outer diameter becomes smaller toward the illustrated left side. The movable side tapered face 21b is formed in a part of the secondary side movable ring body 21 on the inner side in the radial direction and on the illustrated right side. In detail, the movable side tapered face 21b is formed in a state that the inner diameter becomes smaller toward the illustrated left side, so as to face the above fixed side tapered face 11b via the gap S.

The primary side members 12 are provided on the illustrated left side surface of the surface plate 2 so as to protrude toward the space 24 (corresponding to the first space) which is generated on the outer side in the radial direction from the primary side fixed ring body 11 and on the illustrated right side from the secondary side movable ring body 21. The secondary side members 22 are disposed on the illustrated right side surface of the secondary side movable ring body 21 facing the surface plate 2 so as to protrude toward the above space 24 which is generated on the outer side in the radial direction from the primary side fixed ring body 11 and on the illustrated right side from the secondary side movable ring body 21. Thereby, the secondary side members 22 face the above primary side members 12 provided on the surface plate 2, in the illustrated left and right direction.

Note that, in this direct drive motor 1A, a pad member 19 and an adjustment member 18 which are similar to the above pad member 17 and adjustment member 16, respectively, may be provided for the support rod 15 nearest to a base table 3 to which the primary side fixed ring body 11 is fixed. Thereby, it is possible to support the weight of the secondary side movable ring body 21. Further, it is also possible to support the weight of the secondary side movable ring body 21 only with the pad member 17 and the adjustment member 16 without providing the pad member 19 and the adjustment member 18, utilizing the tapered face of the bearing part. Thereby, it is possible to securely align the rotation center of the movable side ring 21 with the above axis Q.

Also in the present modification, the same advantages as those of the above embodiment are obtained. That is, it is possible to prevent the durability degradation of the bearing as that in the case of using the contact-type bearing, and to secure the smooth and highly precise rotation. Further, by providing the primary side members 12 and the secondary side members 22 in the above space 24 which is positioned on the outer side in the radial direction from the primary side fixed ring body 11 and on the above one side in the axial direction (illustrated right side in this example) from the secondary side movable ring body 21, in a manner of utilizing the dead space, it is possible to reduce the size of the entire direct drive motor 1A. That is, it is possible to realize both of securing the smooth and highly precise rotation by the durability degradation prevention of the bearing and reducing the size of the direct drive motor 1A.

### (2) In case of downward disposition

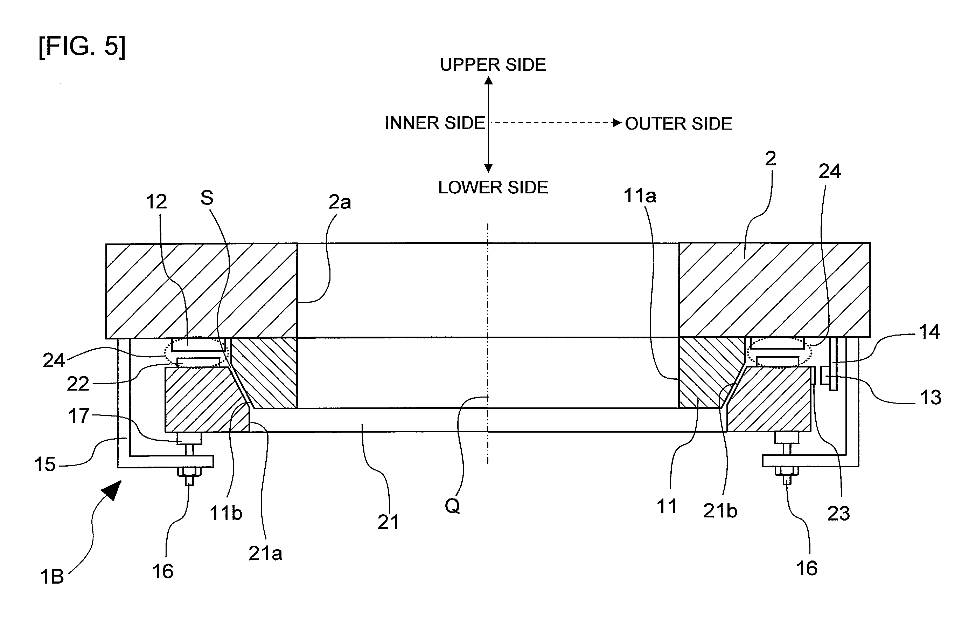

As shown in FIG. 5, in a direct drive motor 1B of this modification, the primary side fixed ring body 11 is fixed on the lower side of the surface plate 2. Further, the secondary side movable ring body 21 is provided on the lower side from this primary side fixed ring body 11, and the secondary side movable ring body 21 is supported in the non-contact manner. That is, in the direct drive motor 1B, the above primary side fixed ring body 11 is disposed on the upper side (corresponding to the one side in the axial direction in this example) and on the inner side in the radial direction (corresponding to the one side in the radial direction in this example) from the secondary side movable ring body 21, and fixed to the lower part of the surface plate 2. The secondary side movable ring body 21 is disposed on the lower side (the other side in the axial direction in this example) and on the outer side in the radial direction (corresponding to the other side in the radial direction in this example) from the primary side fixed ring body 11.

The fixed side tapered face 11b is formed in a part of the primary side fixed ring body 11 on the outer side in the radial direction and on the lower side in a state that the outer diameter becomes smaller toward the lower side. The movable side tapered face 21b is formed in a part of the secondary side movable ring body 21 on the inner side in the radial direction and on the upper side in a state that the inner diameter becomes smaller toward the lower side, so as to face the above fixed side tapered face 11b via the gap S (details to be described below).

The primary side members 12 are provided on the lower surface of the surface plate 2 so as to protrude toward the space 24 (corresponding to the first space) which is generated on the outer side in the radial direction from the primary side fixed ring body 11 and on the upper side from the secondary side movable ring body 21. The secondary side members 22 are disposed on the upper surface of the secondary side movable ring body 21 facing the surface plate 2 so as to protrude toward the above space 24 which is generated on the outer side in the radial direction from the primary side fixed ring body 11 and on the upper side from the secondary side movable ring body 21. Thereby, the secondary side members 22 face the above primary side members 12 provided on the surface plate 2 in the up and down direction.

Note that, in the present modification, the pad member 17 supports the lower surface of the secondary side movable ring body 21 which tends to be separated from the primary side fixed ring body 11 by the own weight.

Also in the present modification, the same advantages as those of the above embodiment are obtained. That is, it is possible to prevent the durability degradation of the bearing as that in the case of using the contact-type bearing, and to secure the smooth and highly precise rotation. Further, by providing the primary side members 12 and the secondary side members 22 in the above space 24 which is positioned on the outer side in the radial direction from the primary side fixed ring body 11 and on the upper side in the axial direction from the secondary side movable ring body 21, in a manner of utilizing the dead space, it is possible to reduce the size of the entire direct drive motor 1B. That is, it is possible to realize both of securing the smooth and highly precise rotation by the durability degradation prevention of the bearing and reducing the size of the direct drive motor 1B.

### (3) Variations of a suction mode and a scale position

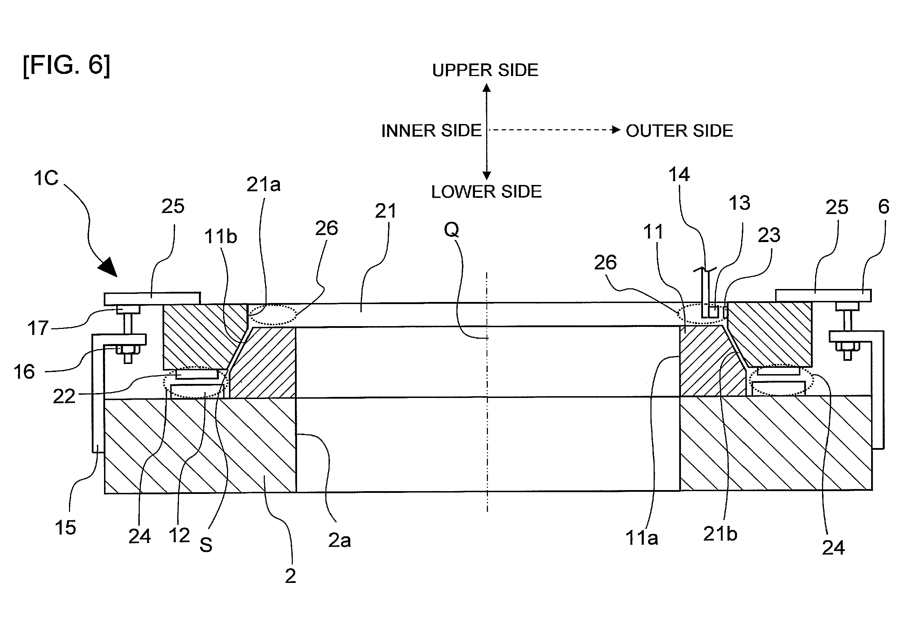

In a direct drive motor 1C of the present modification, as shown in FIG. 6, the secondary side movable ring body 21 is provided with a flange body 25 (corresponding to the part to be sucked). Then, the pad member 17 sucks the secondary side movable ring body 21 downward by sucking the above flange body 25 magnetically (or by reduced pressure).

Further, the scale 23 is disposed on the inner circumference of the secondary side movable ring body 21, that is, on the inner wall of the hollow part 21a. In other words, the scale 23 is provided for the secondary side movable ring body 21 on the side facing a space 26 (corresponding to the second space) which is generated on the upper side (corresponding to the other side in the axial direction) from the primary side fixed ring body 11 and on the inner side in the radial direction (corresponding to the one side in the radial direction) from the secondary side movable ring body 21. In this configuration, the detection sensor 13 is provided for the head (lower end) of the supporting part 14 provided at an optional position which is not shown in the drawing. Thereby, the detection sensor 13 performs detection in the above space 26 facing the scale 23 provided on the inner wall of the above hollow part 21a from the inner side in the radial direction.

Also in the present modification, the same advantages as those of the above embodiment are obtained. Further, the scale 23 is provided for the the secondary side movable ring body 21 on the side facing the above space 26, and the detection sensor 13 is provided in the above space 26 which the scale 23 faces. Thereby, as in the above description, it is not necessary to provide an additional space for disposing the detection sensor 13 by utilizing the dead space, and it is possible to securely reduce the size of the entire direct drive motor 1C.

### (4) In case of not requiring the surface plate

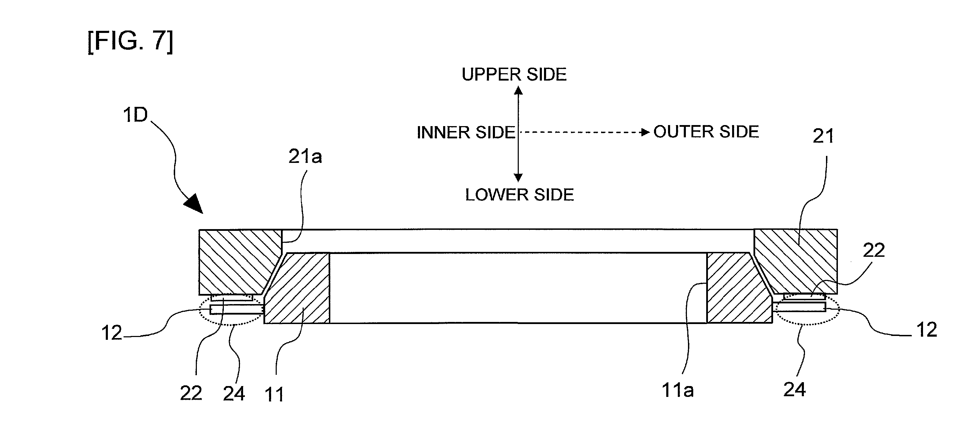

In a direct drive motor 1D of the present modification, it is not always necessary to use the surface plate 2 as shown in FIG. 7.

In this direct drive motor 1D, the primary side members 12 are provided for the primary side fixed ring body 11 on the outer side in the radial direction so as to protrude toward the space 24 (corresponding to the first space), the same as in the above description, which is generated on the outer side in the radial direction from the primary side fixed ring body 11 and on the lower side from the secondary side movable ring body 21.
The secondary side members 22 are disposed on the lower surface of the secondary side movable ring body 21 so as to protrude toward the above space 24 which is generated on the outer side in the radial direction from the primary side fixed ring body 11 and on the lower side from the secondary side movable ring body 21. Thereby, the secondary side members 22 face the above primary side members 12 provided for the primary side fixed ring body 11, in the up and down direction. Note that each of the scale 23 and the detection sensor 13 may have any one of the configurations of the above embodiment and modifications (1) to (3), and explanation and illustration will be omitted (same in the following modifications (5) to (8)).

Also in the present modification, the same advantages as those of the above embodiment are obtained. That is, it is possible to prevent the durability degradation of the bearing as that in the case of using the contact-type bearing, and to secure the smooth and highly precise rotation. Further, by providing the primary side members 12 and the secondary side members 22 in the above space 24 which is positioned on the outer side in the radial direction from the primary side fixed ring body 11 and on the lower side from the secondary side movable ring body 21, in a manner of utilizing the dead space, it is possible to reduce the size of the entire direct drive motor 1D. That is, it is possible to realize both of securing the smooth and highly precise rotation by the durability degradation prevention of the bearing and reducing the size of the direct drive motor 1D.

Further, the present modification does not use the surface plate 2 in particular, and is provided with two members of the primary side fixed ring body 11 and the secondary side movable ring body 21 which is supported by the primary side fixed ring body 11 in the non-contact manner. Then, the primary side member 12 is provided for the primary side fixed ring body 11. Thereby, it is possible to reduce the number of members compared to a case of providing another fixed object other than the primary side fixed ring body 11 and the secondary side movable ring body 21.

### (5) In case of providing the primary side members and the secondary side members in another dead space

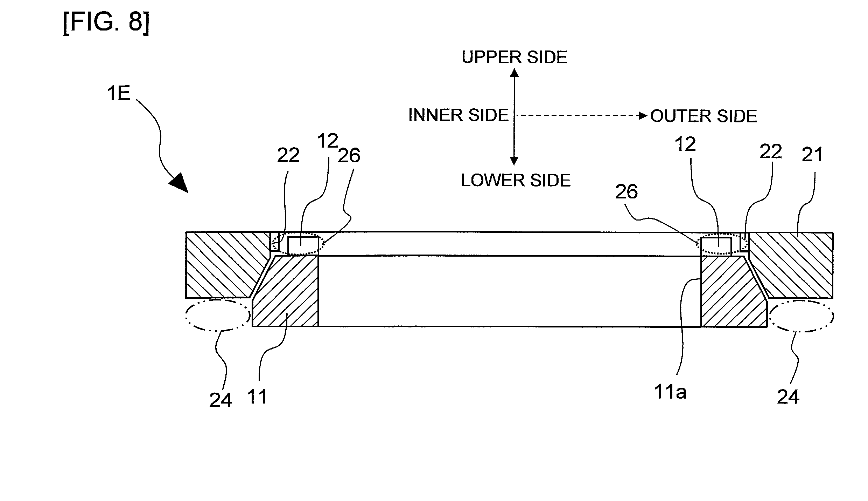

As shown in FIG. 8, in a direct drive motor 1E of this case, the primary side members 12 are provided for the primary side fixed ring body 11 on the upper side so as to protrude toward the above space 26 (corresponding to the second space) which is generated on the upper side (corresponding to the other side in the axial direction) from the primary side fixed ring body 11 and on the inner side in the radial direction (corresponding to the one side in the radial direction) from the secondary side movable ring body 21. The secondary side members 22 are disposed on the inner side of the secondary side movable ring body 21 in the radial direction so as to protrude toward the above space 26 which is generated on the upper side from the primary side fixed ring body 11 and on the inner side in the radial direction from the secondary side movable ring body 21. Thereby, the secondary side members 22 face the above primary side members 12 provided for the the primary side fixed ring body 11, in the radial direction (illustrated left and right direction).

Also in the present modification, the same advantages as those of the above embodiment and the modification (4) are obtained. That is, it is possible to prevent the durability degradation of the bearing as that in the case of using the contact-type bearing, and to secure the smooth and highly precise rotation. Further, by providing the primary side members 12 and the secondary side members 22 in the above space 26 which is positioned on the upper side from the primary side fixed ring body 11 and on the inner side in the radial direction from the secondary side movable ring body 21, in a manner of utilizing the dead space, it is possible to reduce the size of the entire direct drive motor 1E. That is, it is possible to realize both of securing the smooth and highly precise rotation by the durability degradation prevention of the bearing and reducing the size of the direct drive motor 1E. Further, it is possible to reduce the number of members compared to a case of providing another fixed object other than the primary side fixed ring body 11 and the secondary side movable ring body 21.

Further, in the above configuration, by means of utilizing the above space 24 which is the dead space different from the above space 26 (refer to the two-dot chain line in the drawing), the scale 23 may be provided for the secondary side movable ring body 21 on the side facing the above space 24 (illustration is omitted). In this case, the detection sensor 13 is provided in the above space 24 which the scale 23 faces (illustration is omitted). In this configuration, as in the above description, an additional space becomes unnecessary for disposing the detection sensor 13, and it is possible to reduce the size of the entire direct drive motor 1E, also from this aspect.

### (6) In case of reversing the primary side fixed ring body and the secondary side movable ring body between inside and outside.

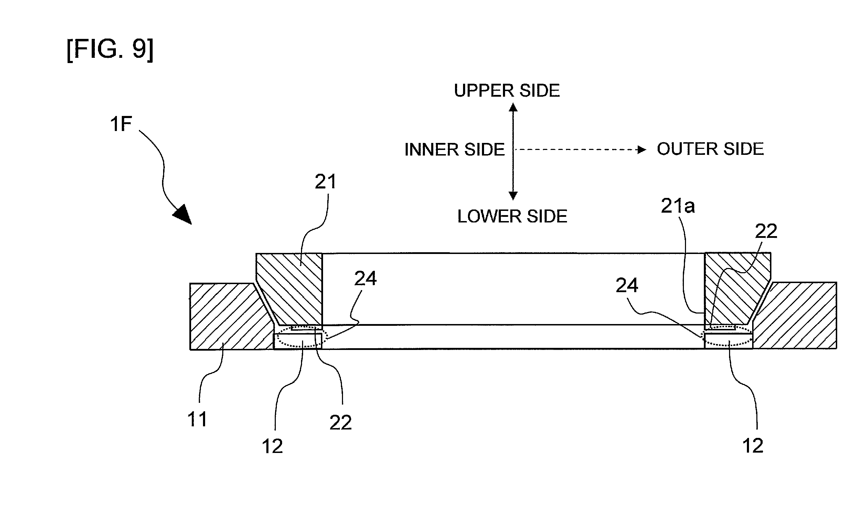

As shown in FIG. 9, in a direct drive motor 1F of the present modification, the primary side fixed ring body 11 is disposed on the lower side (corresponding to the one side in the axial direction in this example) and on the outer side in the radial direction (corresponding to the one side in the radial direction in this example) from the secondary side movable ring body 21. Further, the secondary side movable ring body 21 is disposed on the upper side (corresponding to the other side in the axial direction in this example) and on the inner side in the radial direction (corresponding to the other side in the radial direction in this example) from the primary side fixed ring body 11.

In this direct drive motor 1F, the primary side members 12 are provided for the primary side fixed ring body 11 on the inner side in the radial direction so as to protrude toward the space 24 (corresponding to the first space), the same as in the above description, which is generated on the inner side in the radial direction from the primary side fixed ring body 11 and on the lower side from the secondary side movable ring body 21. The secondary side members 22 are disposed on the lower surface of the secondary side movable ring body 21 so as to protrude toward the above space 24 which is formed on the inner side in the radial direction from the primary side fixed ring body 11 and on the lower side from the secondary side movable ring body 21. Thereby, the secondary side members 22 face the above primary side members 12 provided for the primary side fixed ring body 11, in the up and down direction.

Also in the present modification, the same advantages as those of the above embodiment and modification (4) are obtained. That is, it is possible to prevent the durability degradation of the bearing as that in the case of using the contact-type bearing, and to secure the smooth and highly precise rotation. Further, by providing the primary side members 12 and the secondary side members 22 in the above space 24 which is positioned on the inner side in the radial direction from the primary side fixed ring body 11 and on the lower side from the secondary side movable ring body 21, in a manner of utilizing the dead space, it is possible to reduce the size of the entire direct drive motor 1F. That is, it is possible to realize both of securing the smooth and highly precise rotation by the durability degradation prevention of the bearing and reducing the size of the direct drive motor 1F. Further, it is possible to reduce the number of members compared to a case of providing another fixed object other than the primary side fixed ring body 11 and the secondary side movable ring body 21.

### (7) In case of providing the primary side fixed ring body and the secondary side movable ring body in yet another dead space

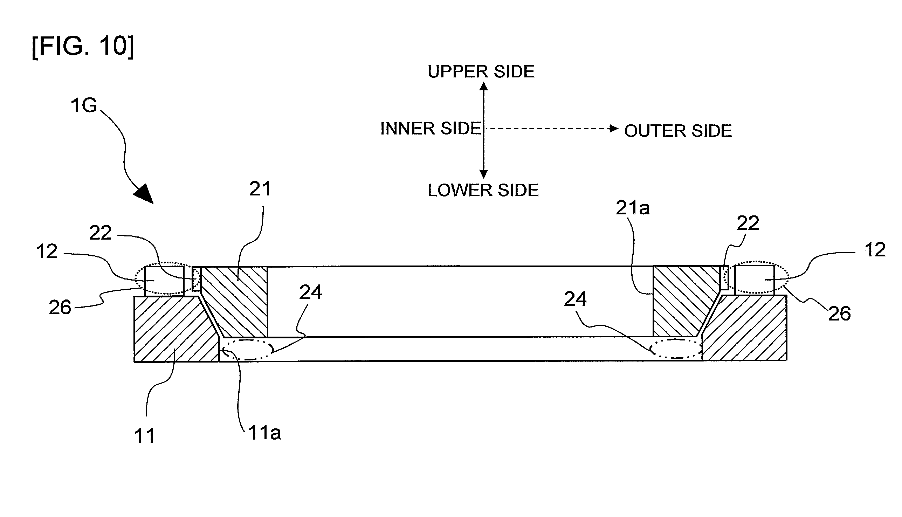

As shown in FIG. 10, in a direct drive motor 1G of the present modification, as in the modification (6) of the above FIG. 9, the primary side fixed ring body 11 is disposed on the lower side (corresponding to the one side in the axial direction in this example) and on the outer side in the radial direction (corresponding to the one side in the radial direction in this example) from the secondary side movable ring body 21. Further, the secondary side movable ring body 21 is disposed on the upper side (corresponding to the other side in the axial direction in this example) and on the inner side in the radial direction (corresponding to the other side in the radial direction in this example) from the primary side fixed ring body 11.

Then, in this direct drive motor 1G, the primary side members 12 are provided for the primary side fixed ring body 11 on the upper side so as to protrude toward the space 26 (corresponding to the second space) which is generated on the upper side from the primary side fixed ring body 11 and on the outer side in the radial direction from the secondary side movable ring body 21. The secondary side members 22 are disposed on the outer surface of the secondary side movable ring body 21 in the radial direction so as to protrude toward the above space 26 which is generated on the upper side from the primary side fixed ring body 11 and on the outer side in the radial direction from the secondary side movable ring body 21. Thereby, the secondary side members 22 face the above primary side members 12 provided for the primary side fixed ring body 11, in the radial direction (illustrated left and right side).

Also in the present modification, the same advantages as those of the above embodiment and modification (4) are obtained. That is, it is possible to prevent the durability degradation of the bearing as that in the case of using the contact-type bearing, and to secure the smooth and highly precise rotation. Further, by providing the primary side members 12 and the secondary side members 22 in the above space 26 which is positioned on the upper side from the primary side fixed ring body 11 and on the outer side in the radial direction from the secondary side movable ring body 21, in a manner of utilizing the dead space, it is possible to reduce the size of the entire direct drive motor 1G. That is, it is possible to realize both of securing the smooth and highly precise rotation by the durability degradation prevention of the bearing and reducing the size of the direct drive motor 1G. Further, it is possible to reduce the number of members compared to a case of providing another fixed object other than the primary side fixed ring body 11 and the secondary side movable ring body 21.

Further, in the above configuration, by means of utilizing the above space 24 which is the dead space different from the above space 26 (refer to the two-dot chain line in the drawing), the scale 23 may be provided for the secondary side movable ring body 21 on the side facing the above space 24 (illustration is omitted). In this case, the detection sensor 13 is provided in the above space 24 which the scale 23 faces (illustration is omitted). In this configuration, as in the above description, an additional space becomes unnecessary for disposing the detection sensor 13, and it is possible to reduce the size of the entire direct drive motor 1G, also from this aspect.

### (8) Others

While, in the above, the air path is provided for the primary side fixed ring body 11 of the fixed side and the compressed air is supplied to the gap S via this air path, the present disclosure is not limited to this case. That is, the air path may be provided for the secondary side movable ring body 21 and the compressed air may be supplied to the gap S via this air path.

Further, other than the above description, the above embodiment and each of the modifications may be appropriately combined to be utilized.

For other modes, while each thereof is not illustrated, the disclosed embodiment is provided with various kinds of modification to be carried out in a range without departing from the gist thereof.

## Claims

1. A direct drive motor (1; 1A; 1B; 1C; 1E; 1F; 1G) including a predetermined axis (Q), **characterized in that**:
the direct drive motor comprises:
a first ring body (11) configured to include a first hollow part (11a) and be disposed on one side in an axial direction along the axis (Q) and also on one side in a radial direction perpendicular to the axial direction; and
a second ring body (21) configured to include a second hollow part (21a) and be disposed on the other side in the axial direction and also on the other side in the radial direction, wherein
the first ring body (11) includes a first tapered face (11b) in a part of the first ring body (11) on the other side in the axial direction and also on the other side in the radial direction,
the second ring body (21) includes a second tapered face (21b) disposed facing the first tapered face (11b) via a gap (S), in a part of the second ring body (21) on the one side in the axial direction and also on the one side in the radial direction,
either ring body (11) of the first ring body (11) or the second ring body (21) includes an air path (11c) configured to supply compressed air to the gap, so as to support the other ring body (21) of the first ring body (11) and the second ring body (21) in a non-contact manner,
one ring body (21) of the first ring body (11) and the second ring body (21) includes a secondary side member (22) configured to include at least one of a permanent magnet and a reaction plate, to configure a secondary side movable ring body (21), and the other ring body (11) of the first ring body (11) and the second ring body (21) or a fixed body (2) fixed to the other ring body (11) includes a primary side member (12) configured to include an armature coil disposed facing the secondary side member (22) via an air gap, to configure a primary side fixed ring body (11), and
the secondary side movable ring body (21) is driven to rotate with respect to the primary side fixed ring body (11) via the gap (S) with the axis (Q) as a rotation center.

2. The direct drive motor (1; 1A; 1B; 1C; 1D; 1E; 1F; 1G) according to claim 1, wherein:
the primary side member (12) and the secondary side member (22) are disposed
in a first space (24) which is on the other side in the radial direction from the first ring body (11) and also on the one side in the axial direction from the second ring body (21), or
in a second space (26) which is on the other side in the axial direction from the first ring body (11) and also on the one side in the radial direction from the second ring body (21).

3. The direct drive motor (1; 1A; 1B; 1C) according to claim 2, further comprising a stator base (2) on which the primary side fixed ring body (11) is disposed, wherein
the secondary side member (22) is arranged on the secondary side movable ring body (21) so as to protrude toward either one of the first space (24) and the second space (26), and
the primary side member (12) is arranged on the stator base (2) so as to protrude toward the either one of the first space (24) and the second space (26).

4. The direct drive motor (1D; 1E; 1F; 1G) according to claim 2, wherein:
the secondary side member (22) is arranged on the secondary side movable ring body (21) so as to protrude toward either one of the first space (24) and the second space (26), and
the primary side member (12) is arranged on the primary side fixed ring body (11) so as to protrude toward the either one of the first space (24) and the second space (26).

5. The direct drive motor (1C) according to claim 3 or claim 4, wherein:
an encoder scale (23) is disposed on the secondary side movable ring body (21) on a side facing the first space (24) or the second space (26), and
an encoder sensor (13) configured to detect the encoder scale (23) is disposed in the first space (24) or the second space (26) which the encoder scale (23) faces.

6. The direct drive motor (1) according to any one of claims 3 to 5, further comprising
an air ejection part configured to eject compressed air to a pressure reception part disposed at the secondary side movable ring body (21) which configures a rotation side, so as to apply force the secondary side movable ring body (21) toward the primary side fixed ring body (11).

7. The direct drive motor (1C) according to any one of claims 3 to 5, further comprising
a suction part (17) configured to suck magnetically or sucks under reduced pressure a part (25) to be sucked disposed on the secondary side movable ring body (21) serving as a rotation side, so as to apply force the secondary side movable ring body (21) serving as the rotation side toward the primary side fixed ring body (11) serving as a fixed side.

8. The direct drive motor (1) according to any one of claims 1 to 7, wherein:
the primary side fixed ring body (11) is configured so as to enable the number of the armature coils of the primary side member (12) to be increased or decreased.

9. The direct drive motor (1) according to any one of claims 1 to 8, wherein:
each of the first ring body (11) and the second ring body (21) is configured with stone material or ceramic material, and
each inner diameter size of the first hollow part (11a) and the second hollow part (21a) is not smaller than 300 [mm] and not larger than 3,000 [mm].
